(19) Europäisches Patentamt

European Patent Office

Office européen des brevets

(11) **EP 1 650 968 A1**

(12) **EUROPEAN PATENT APPLICATION**

(43) Date of publication:
26.04.2006 Bulletin 2006/17

(51) Int Cl.:
*H04N 5/94* (2006.01)

(21) Application number: 05256019.0

(22) Date of filing: 27.09.2005

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **25.10.2004 JP 2004309205**

(71) Applicant: **SONY CORPORATION
Tokyo (JP)**

(72) Inventors:
• **Choi, Yoonki,
Sony Corporation
Shinagawa-ku
Tokyo (JP)**
• **Hirai, Jun,
Sony Corporation
Shinagawa-ku
Tokyo (JP)**

(74) Representative: **Smith, Samuel Leonard
J.A. Kemp & Co.,
14 South Square,
Gray's Inn
London WC1R 5JJ (GB)**

(54) **Video signal processing apparatus and video signal processing method**

(57)     A video signal processing apparatus is disclosed. The video signal processing apparatus determines whether pixels of a video signal have been dropout compensated and compensates pixels that have been dropout compensated according to a correlation of adjacent pixels, corresponding pixels in adjacent fields, or corresponding pixels in adjacent frames.

**Fig. 1**

**Description**

CROSS REFERENCES TO RELATED APPLICATIONS

[0001]    The present invention contains subject matter related to Japanese Patent Application No. 2004-309205 filed in the Japanese Patent Office on October 25, 2004, the entire contents of which being incorporated herein by reference.

BACKGROUND OF THE INVENTION

Field of the Invention

The present invention relates to a video signal processing apparatus and a video signal processing method that determine pixels that have been dropout compensated from a video signal and perform an interpolation process for the determined pixels.

Description of the Related Art

In recent years, digital recording mediums such as digital versatile discs (DVDs) on which digital signals are recorded have been outspread. Analog video signals that were recorded by video cassette recorders (VCRs) are converted into digital signals and then recorded on digital recording mediums.

When an analog video signal recorded on a magnetic tape such as a VCR tape is reproduced, a part of a video signal may be dropped out due to dirt and a scratch on the surface of the tape. Thus, the video signal may not be correctly read, namely dropped out. When an analog VCR detects a dropout, since lines of a video signal are correlated, the analog VCR compensates the dropout by outputting the immediately preceding line of the video signal.

The following patent document 1 describes a dropout compensating apparatus that replaces a dropout portion with a past video signal that is strongly correlated with the dropout portion.

[Patent Document 1] Japanese Patent Laid-Open Publication No. HEI 7-123365

SUMMARY OF THE INVENTION

However, depending on a video signal, it may be insufficient to compensate a dropout portion with the immediately preceding line of the video signal. The dropout may cause the picture quality of the video signal to deteriorate. In particular, when a correlation between a line to be compensated and the immediately preceding line is weak, the picture quality of the video signal largely deteriorates. In this case, when a video signal that has been dropout compensated is recorded on a recording medium, the video signal whose picture quality is deteriorated is recorded on the recording medium.

Thus, it is necessary to detect pixels that have been dropout compensated (these pixels are referred to as compensated pixels) and interpolate the compensated pixels with good pixels of the video signal. Thus, it is necessary to determine compensated pixels of a video signal.

In the past, when a dropout occurred in an analog VCR, it output a dropout indication signal that indicates that the dropout occurred. When a compensated pixel is detected with the dropout indication signal, since a circuit that detects the dropout indication signal is disposed, the structure of the apparatus becomes complicated. In addition, this circuit can be used for only predetermined hardware.

In view of the foregoing, it would be desirable to provide a video signal processing apparatus and a video signal processing method that determine compensated pixels with a video signal that has been dropout compensated, replace the compensated pixels with interpolated pixels, and generate a video signal closer to an original video signal.

According to an embodiment, there is provided a video signal processing apparatus that determines whether pixels of a video signal have been dropout compensated and compensates pixels that have been dropout compensated according to a correlation of adjacent pixels, corresponding pixels in adjacent fields, or corresponding pixels in adjacent frames.

According to an embodiment, there is provided a video signal processing apparatus that determines pixels that have been dropout compensated from a video signal that has been dropout compensated. The video signal processing apparatus has a detection section and a determination section. The detection section detects the absolute value or the square value of the difference of pixel data of two pixels that exist at the same horizontal position of two adjacent lines of the video signal. The determination section determines a pixel that satisfies a first condition of which the absolute value or the square value is smaller than a predetermined threshold value to be a pixel that has been dropout compensated.

According to an embodiment, there is provided a video signal processing apparatus that determines pixels that have been dropout compensated from a video signal that has been dropout compensated. The video signal processing apparatus has a first detection section, a second detection section, and a determination section. The first detection section detects the absolute value or the square value of the first difference of pixel data of two pixels that exist at the same position in a predetermined field or frame and the temporally adjacent field or frame that is immediately preceded by the predetermined field or frame. The second detection section detects the absolute value or the square value of the second difference of pixel data of two pixels that exist at the same position in the predetermined field or frame and the temporally adjacent field or frame that is immediately followed by the predetermined field or frame. The determination section determines a pixel that satisfies a second condition of which the absolute value or the square value of the first difference is larger than a predetermined threshold value and the absolute value or the square value of the second difference is larger than the predetermined threshold value to be a pixel that has been dropout compensated.

According to an embodiment, there is provided a video signal processing apparatus that determines pixels that have been dropout compensated from a video signal that has been dropout compensated. The video signal processing apparatus has a first detection section, a second detection section, a third detection section, and a determination section. The first detection section detects the absolute value or the square value of the first difference of pixel data of two pixels that exist at the same horizontal position of adjacent two lines of the video signal. The second detection section detects the absolute value or the square value of the second difference of pixel data of two pixels that exist at the same position in a predetermined field or frame and the temporally adjacent field or frame that is immediately preceded by the predetermined field or frame. The third detection section detects the absolute value or the square value of the third difference of pixel data of two pixels that exist at the same position in the predetermined field or frame and the temporally adjacent field or frame that is immediately followed by the predetermined field or frame. The determination section determines a pixel that satisfies both a first condition of which the absolute value or the square value of the first difference is smaller than a first threshold value and a second condition of which the absolute value or the square value of the second difference is larger than a second threshold value and the absolute value or the square value of the third difference is larger than the second threshold value to be a pixel that has been dropout compensated.

According to an embodiment, there is provided a video signal processing method of determining pixels that have been dropout compensated from a video signal that has been dropout compensated. The absolute value or the square value of the difference of pixel data of two pixels that exist at the same horizontal position of two adjacent lines of the video signal is detected. A pixel that satisfies a first condition of which the absolute value or the square value is smaller than a predetermined threshold value is determined to be a pixel that has been dropout compensated.

According to an embodiment, there is provided a video signal processing method of determining pixels that have been dropout compensated from a video signal that has been dropout compensated. The absolute value or the square value of the first difference of pixel data of two pixels that exist at the same position in a predetermined field or frame and the temporally adjacent field or frame that is immediately preceded by the predetermined field or frame is detected. The absolute value or the square value of the second difference of pixel data of two pixels that exist at the same position in the predetermined field or frame and the temporally adjacent field or frame that is immediately followed by the predetermined field or frame is detected. A pixel that satisfies a second condition of which the absolute value or the square value of the first difference is larger than a predetermined threshold value and the absolute value or the square value of the second difference is larger than the predetermined threshold value is determined to be a pixel that has been dropout compensated.

According to an embodiment, there is provided a video signal processing method of determining pixels that have been dropout compensated from a video signal that has been dropout compensated. The absolute value or the square value of the first difference of pixel data of two pixels that exist at the same horizontal position of adjacent two lines of the video signal is detected. The absolute value or the square value of the second difference of pixel data of two pixels that exist at the same position in a predetermined field or frame and the temporally adjacent field or frame that is immediately preceded by the predetermined field or frame is detected. The absolute value or the square value of the third difference of pixel data of two pixels that exist at the same position in the predetermined field or frame and the temporally adjacent field or frame that is immediately followed by the predetermined field or frame is detected. A pixel that satisfies both a first condition of which the absolute value or the square value of the first difference is smaller than a first threshold value and a second condition of which the absolute value or the square value of the second difference is larger than a second threshold value and the absolute value or the square value of the third difference is larger than the second threshold value are determined to be a pixel that has been dropout compensated.

According to an embodiment of the present invention, compensated pixels are determined from a video signal. The compensated pixels are replaced with interpolated values. As a result, a video signal closer to an original video signal can be generated.

According to an embodiment of the present invention, since a video signal that has been dropout compensated is used to determine compensated pixels, the positions of compensated pixels can be detected and the compensated pixels can be interpolated without need to use particular hardware.

According to an embodiment of the present invention, since a dropout detection signal is not used for a pixel that has been dropout compensated, a dubbed video signal whose pixels have been dropout compensated can become closer to an original video signal. In addition, these processes can be performed by software.

These and other objects, features and advantages of the present invention will become more apparent in light of the following detailed description of a best mode embodiment thereof, as illustrated in the accompanying drawings.

BRIEF DESCRIPTION OF THE DRAWINGS

The invention will become more fully understood from the following detailed description, taken in conjunction with the accompanying drawings, wherein similar reference numerals denote similar elements, in which:

Fig. 1 is a block diagram showing a video signal processing apparatus according to an embodiment of the present invention;
Fig. 2 is a photo showing a picture of a mask A according to an embodiment of the present invention;
Fig. 3 is a photo showing a frame of a predetermined time;
Fig. 4 is a photo of the temporally immediately preceding frame of the frame shown in Fig. 3;
Fig. 5 is a photo of the temporally immediately following frame of the frame shown in Fig. 3;
Fig. 6 is a photo showing a picture of a mask B according to an embodiment of the present invention;
Fig. 7 is a photo showing a picture of a mask AB according to an embodiment of the present invention;
Fig. 8 is a photo showing a picture of a mask C according to an embodiment of the present invention; and
Fig. 9 is a photo showing a picture in a process that removes a moving portion from an interlaced signal.

DETAILED DESCRIPTION OF THE PREFERRED EMBODIMENTS

Next, with reference to the accompanying drawings, an embodiment of the present invention will be described. According to the embodiment, input signals are component signals of which luminance signal Y and color difference signals Cr and Cb are Y/C separated.

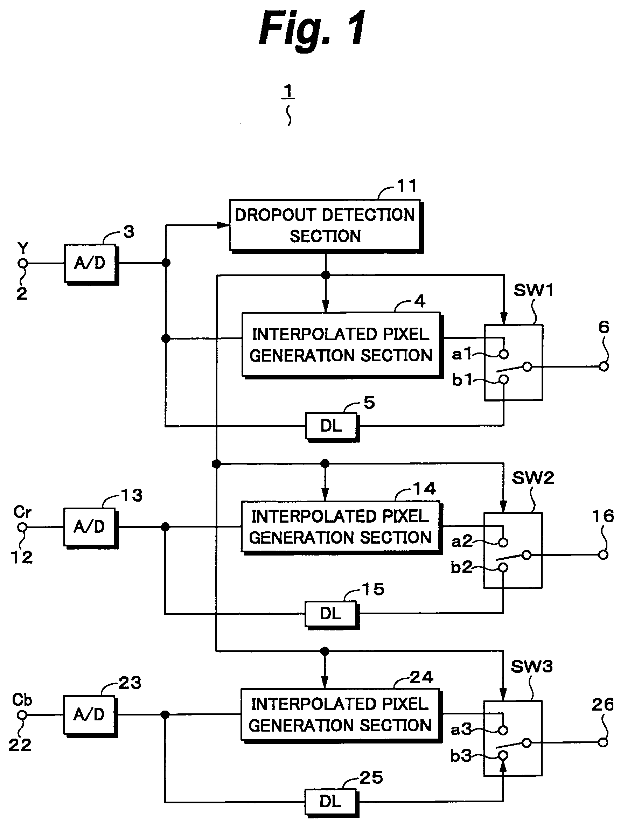

Fig. 1 shows a video signal processing apparatus 1 according to the embodiment of the present invention. A luminance signal Y of analog video signals as output signals of a VCR is supplied to an input terminal 2. The luminance signal Y is supplied to an A/D converter 3. The A/D converter 3 converts the luminance signal Y into a digital signal and supplies the digital signal to a dropout detection section 11.

The dropout detection section 11 performs a process (that will be described later) to determine compensated pixels of the video signal that is input to the input terminal 2. In addition, the dropout detection section 11 generates a dropout detection signal DO that represents whether a pixel has been dropout compensated. The detection signal DO is supplied to an interpolated pixel generation section 4 and a switch SW1. Hereafter, pixels that have not been dropout compensated are referred to as normal pixels.

The switch SW1 is connected to a terminal al or a terminal b1 according to the supplied detection signal DO. When a compensated pixel is detected, the switch SW1 is connected to the terminal al so that the compensated pixel is replaced with pixel data of an interpolated pixel generated by the interpolated pixel generation section 4, which will be described later. When a normal pixel is detected, the switch SW1 is connected to the terminal b1 so that pixel data supplied from the A/D converter 3 are output. A delay circuit (DL) 5 is disposed. The DL 5 delays the output of the A/D converter 3 for a process time of the interpolated pixel generation section 4. Pixel data selected by the switch SW1 are obtained from an output terminal 6.

The foregoing process applies to the color difference signals Cr and Cb as well as the luminance signal Y. In other words, the color difference signal Cr and the color difference signal Cb that are input to an input terminal 12 and an input terminal 22 are converted into digital signals by an A/D converter 13 and an A/D converter 23, respectively. In addition, the detection signal DO supplied from the dropout detection section 11 is supplied to a switch SW2 and a switch SW3.

Switching processes of the switch SW2 and the switch SW3 are controlled according to the detection signal DO. When a compensated pixel is detected, the switch SW2 is connected to a terminal a2 so that the compensated pixel is replaced with interpolated pixel data generated by an interpolated pixel generation section 14 and the interpolated pixel data are output. When a normal pixel is detected, the switch SW2 is connected to a terminal b2. The selected pixel data are output to an output terminal 16. Likewise, when a compensated pixel is detected, the switch SW3 is connected to a terminal a3 so that the compensated pixel is replaced with interpolated pixel data generated by an interpolated pixel generation section 24 and the interpolated pixel data are output. When a normal pixel is detected, the switch SW3 is connected to a terminal b3. The selected pixel data are supplied to an output terminal 26.

In addition, a delay circuit 15 and a delay circuit 25 are disposed. The delay circuit 15 and the delay circuit 25 delay outputs of the A/D converter 13 and the A/D converter 23 for process times of the interpolated pixel generation section 14 and the interpolated pixel generation section 24, respectively.

Output signals of the output terminals 6, 16, and 26 are converted into signals according to a predetermined format. The converted signals are recoded on a recording medium (not shown), a hard disc drive (HDD), or the like and output to a monitor (not shown).

The dropout detection section 11 performs a process that determines a compensated pixel. Next, this process will be described. In the following description, pixel data are denoted by I (y, x, t) where y represents a vertical position (line), x represents a horizontal position (column), and t represents a frame number or a field number. In the interlace system, since one frame is composed of two fields, when y is an even value, it represents an even field; when y is an odd value, it represents an odd field.

The dropout detection section 11 performs a process that obtains the difference between two pixels at the same horizontal position of adjacent two lines in the same field to determine a compensated pixel (hereinafter, this difference is referred to as line difference). The line difference is obtained by formula (1).

$$D_A (y, x, t) = I (y, x, t) - I (y - 2, x, t)$$

$$... (1)$$

The absolute value of the difference $D_A$ and a predetermined threshold value $T_A$ are compared. A pixel of which the difference $D_A$ is smaller than the threshold value $T_A$ is selected. Whether a pixel is selected is represented by data of one bit. When a pixel is selected, it is represented by "1" (that means logical "1"). When a pixel is not selected, it is represented by "0" (that means logical "0"). A condition of which the difference $D_A$ is smaller than the threshold value $T_A$ is referred to as a first condition.

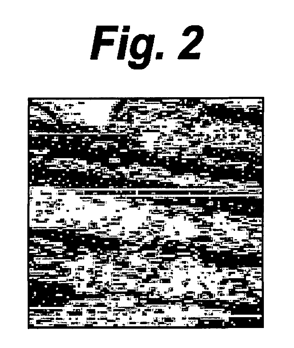

For easy understanding, Fig. 2 shows a picture of one frame of a mask A of which a pixel that satisfies the first condition is represented by "1". The mask A can be expressed by formula (2).

$$Mask\ A = |D_A| < T_A\ ... (2)$$

A dropout compensation is performed by replacing a dropout with the immediately preceding line of a video signal. Thus, the difference of pixel data of two pixels at the same horizontal position of the two adjacent lines becomes small. As a result, a pixel whose value is "1" in the mask A, which represents that the difference of pixel data is small, is a compensated pixel.

In addition, the dropout detection section 11 determines the chronological correlation of pixel data using the frame difference. The dropout detection section 11 obtains a first difference between pixel data I (y, x, t) and pixel data I (y, x, t - 1), where t - 1 represents the temporally immediately preceding frame of t, as expressed by formula (3).

$$D_p (y, x) = I (y, x, t) - I (y, x, t - 1) ...$$

$$(3)$$

In addition, a second difference between pixel data I (y, x, t) and pixel data I (y, x, t + 1), where t + 1 represents the temporally immediately following frame of t, is obtained as expressed by formula (4).

$$D_n (y, x) = I (y, x, t) - I (y, x, t + 1) ...$$

$$(4)$$

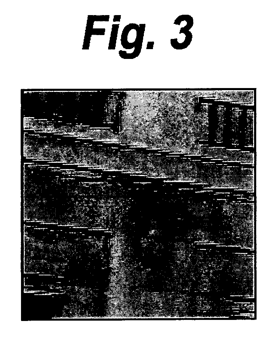

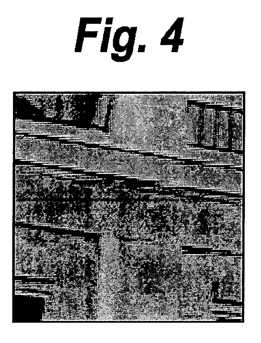

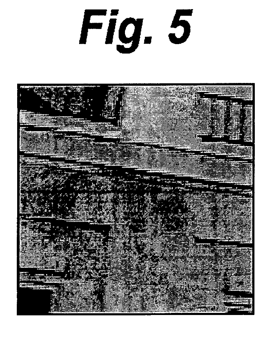

Fig. 3, Fig. 4, and Fig. 5 show examples of pictures of frame t, frame t - 1, and frame t + 1.

The absolute value of the first frame difference Dp and the absolute value of the second frame difference $D_n$ are compared with a predetermined threshold value $T_B$. A pixel that satisfies a second condition of which the absolute value of the difference $D_p$ is larger than the threshold value $T_B$ and the absolute value of the difference $D_n$ is larger than the threshold value $T_B$ is selected. A mask B is generated with a pixel that satisfies the second condition. The mask B can be expressed by formula (5).

$$\texttt{Mask B = (|D_p| > T_B) AND (|Dn| > T_B) \quad ... \quad (5)}$$

The second condition may be expressed by formula (6) instead of formula (5).

$$\texttt{Mask B = [(D_p < - T_B) AND (D_n < - T_B)] OR [D_p}$$
$$\texttt{> T_B] AND (D_n > T_B)] \quad ... \quad (6)}$$

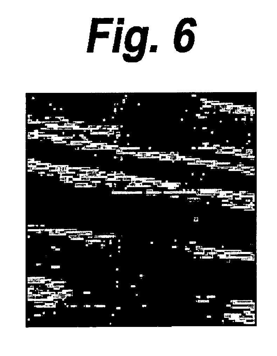

A pixel that satisfies the second condition is "1" (that means logical "1") and a pixel that does not satisfy the second condition is "0" (that means logical "0"). For easy understanding, Fig. 6 shows a picture of one frame of the mask B of which a pixel that satisfies the second condition is "1".

Since a video signal is continuous, a pixel in a predetermined frame and corresponding pixels in the immediately preceding and following frames have strong correlations. However, when the dropout compensation is performed, since a pixel of a line is replaced with a corresponding pixel of the immediately preceding line, a pixel in a predetermined frame and corresponding pixels in the immediately preceding and following frames have weak correlations and appear as noise. The strength and weakness of correlations can be determined by comparing the frame difference with a threshold value. Thus, it can be determined that a pixel that is "1" in the mask B, which represents a weak correlation, is a compensated pixel.

According to the embodiment, the mask B is generated by obtaining the difference between frames. Instead, the mask B may be generated by obtaining the difference between fields.

When a pixel that satisfies both the first condition and the second condition is "1", a mask AB can be generated. The mask AB can be expressed by formula (7).

$$\texttt{Mask AB = mask A \& mask B \quad ... \quad (7)}$$

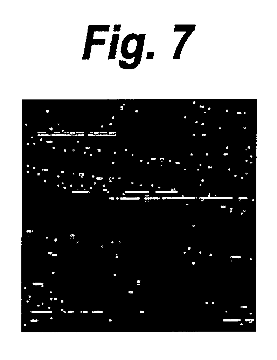

Fig. 7 shows an example of a picture of the mask AB. Pixels that are "1" show in Fig. 7 include pixels that are randomly generated and pixels that are successive in the horizontal direction.

A dropout tends to occur as a burst, not at random. Because of this tendency, it can be determined that when the number of pixels that are "1" and that are successive in the horizontal direction is not larger than a predetermined threshold value, they not be pixels that have not been dropout compensated (for example, noise). Pixels that are "1" of the mask AB and that are not successive for a predetermined threshold value are bit 0. These pixels are a mask C. A condition of which pixels that are "1" are successive in the horizontal direction for the threshold value or more is a third condition.

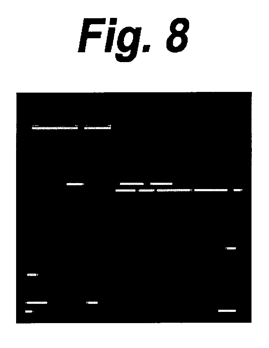

Fig. 8 shows a picture of the mask C. Pixels that are "1" of the mask C may contain normal pixels. These pixels are a moving portion of an interlaced picture. In other words, a moving portion of a video signal of an interlaced picture the same characteristic as compensated pixels, namely the frame difference is small, the frame difference is large. Thus, the moving portion appears as a burst. Thus, pixels that are "1" of the mask C may contain both compensated pixels and normal pixels.

Thus, a moving portion is removed from an interlaced picture. Statistically, a dropout tends to occur in the same field, whereas a moving portion of an interlaced picture tends to occur in the same frame.

It is assumed that a dropout is detected in a line $y_n$ in which pixel data (y, x) exist. When a dropout is long, it occupies not only the line $y_n$ but line $y_{n+2}$, line $y_{n+4}$, and so forth, namely a plurality of lines of the same field. However, statistically, a dropout tends not to occur in different fields such as line $y_{n+1}$ and line $y_{n+3}$.

In contrast, a moving portion of a video signal of an interlaced picture occupies different fields. Thus, if a line $y_n$ and the upper and lower lines, line $y_{n+1}$ or line $y_{n+3}$ are determined as dropouts, it is determined that they be a moving portion of an interlaced picture and pixels that are "1" of the line $y_n$ are changed to "0".

In other words, the number of pixels that are determined as "1" is calculated for each line as expressed by formula (8).

$$S\ (y)\ =\ \Sigma\ MASK_c\ (y,\ x)\ where\ x\ =\ 1,\ 2,\ \ldots$$

$$\ldots\ (8)$$

Next, the differences between the value S (y) obtained for each line and the value S (y - 1) for the immediately preceding line and the difference between the value S (y) obtained for each line and the value S (y + 1) obtained for the immediately following line are obtained as expressed by formula (9) and formula (10), respectively.

$$D_{Sn}\ (y)\ =\ S\ (y)\ -\ S\ (y\ -\ 1)\ \ldots\ (9)$$

$$D_{Sp}\ (y)\ =\ S\ (y)\ -\ S\ (y\ +\ 1)\ \ldots\ (10)$$

When at least one of the obtained differences $D_{Sn}$ and $D_{Sp}$ is smaller than the threshold value $T_d$, the pixels are normal pixels. When at least one of the differences $D_{Sn}$ and $D_{Sp}$ is equal to or larger than the threshold value $T_d$, the pixels are compensated pixels. In other words, pixels that satisfy at least one of the conditions of formula (11) and formula (12) are "0" as expressed by formula (13).

$$D_{Sn}\ (y_n)\ <\ T_d\ \ldots\ (11)$$

$$D_{Sp}\ (y_n)\ <\ T_d\ \ldots\ (12)$$

$$MASK_c\ (y_n,\ x)\ =\ 0\ \ldots\ (13)$$

When the difference of the number of compensated pixels of one line and the number of compensated pixels of an adjacent line is smaller than the threshold value, it can be determined that the compensated pixels be a moving portion of an interlaced picture and occupy a plurality of lines. Thus, when a pixel of which at least one of the obtained differences is smaller than the threshold value is determined to be a normal pixel and "1" and a pixel of which at least one of the obtained differences is equal to or larger than the threshold value is determined to be a compensated pixel and "0", a moving portion of an interlaced picture can be removed. The condition of which at least one of the differences obtained as expressed by formula (11) and formula (12) is smaller than the predetermined threshold value is referred to as a fourth condition.

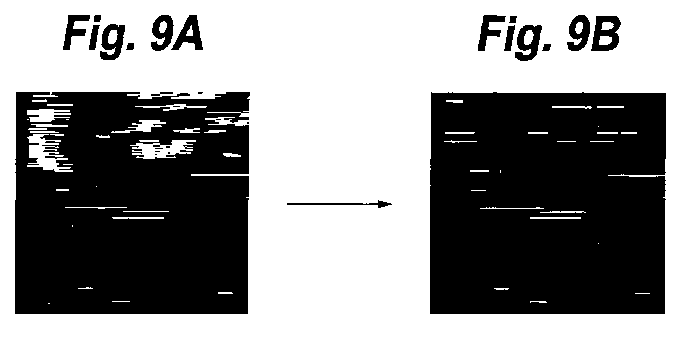

Fig. 9A shows another example of the mask C that contains a moving portion of an interlaced picture. When pixels that are "1" and that occupy a plurality of lines are removed in Fig. 9A, a video signal (mask D) of an interlaced picture from which the moving portion is removed can be obtained as shown in Fig. 9B.

Next, generation of interpolated values against compensated pixels will be described. When interpolated values are generated against compensated pixels, pixels that are strongly correlated with the compensated pixels are used. As a result, a video signal close to the original video signal can be generated. Thus, the interpolated pixel generation section 4, the interpolated pixel generation section 14, and the interpolated pixel generation section 24 detect pixels strongly correlated with compensated pixels.

The absolute values of the differences of a compensated pixel and each adjacent pixel that exists in the horizontal direction (D1), the vertical direction (D2), the left diagonal direction (D3), and the right diagonal direction (D4) are calculated. The direction of the two pixels of which the absolute value of the difference is the smallest has a strong correlation.

The absolute value of the difference of two pixels is obtained by for example formulas (12) to (15).

$$D1 \ (y, \ x, \ t) \ = \ |I \ (y, \ x, \ t \ - \ 1) \ - \ I \ (y, \ x, \ t \ + \ 1)| \ \ldots \ (12)$$

$$D2 \ (y, \ x, \ t) \ = \ |I \ (y \ - \ 1, \ x, \ t) \ - \ I \ (y \ + \ 1, \ x, \ t)| \ \ldots \ (13)$$

$$D3 \ (y, \ x, \ t) \ = \ |I \ (y \ - \ 1, \ x \ + \ 1, \ t) \ - \ I \ (y \ + \ 1, \ x \ - \ 1, \ t)| \ \ldots \ (14)$$

$$D4 \ (y, \ x, \ t) \ = \ |I \ (y \ - \ 1, \ x \ - \ 1, \ t) \ - \ I \ (y \ + \ 1, \ x \ + \ 1, \ t)| \ \ldots \ (15)$$

The average value of a compensated pixel and the adjacent pixel in the direction having a strong correlation with the compensated pixel is obtained as an interpolated value. The interpolated value is generated by the interpolated pixel generation section 4, the interpolated pixel generation section 14, and the interpolated pixel generation section 24 shown in Fig. 1. A plurality of pixels that are temporally and/or spatially different are used. Specifically, interpolated values are generated in the following methods.

(1) An interpolated value is generated with the average value of a compensated pixel and a corresponding pixel in adjacent frames.

$$I' \ (y, \ x, \ t) \ = \ (I \ (y, \ x, \ t \ - \ 1) \ + \ I \ (y, \ x, \ t \ + \ 1)) \ / \ 2$$

(2) An interpolated value is generated with the average value of a compensated pixel and an upper or lower pixel in the same frame (or the same field).

$$I' \ (y, \ x, \ t) \ = \ (I \ (y \ - \ 1, \ x, \ t) \ + \ I \ (y \ + \ 1, \ x, \ t)) \ / \ 2$$

(3) An interpolated value is generated with the average value of a compensated pixel and an upper or lower left pixel in the same frame (or the same field).

$$I'(y, x, t) = (I(y - 1, x + 1, t) + I(y + 1, x - 1, t)) / 2$$

(4) An interpolated value is generated with the average value of a compensated pixel and an upper or lower right pixel in the same frame (or the same field)

$$I'(y, x, t) = (I(y - 1, x - 1, t) + I(y + 1, x + 1, t)) / 2$$

Compensated pixels are replaced with generated interpolated values and selectively output by the switch SW1, the switch SW2, and the switch SW3.

In the video signal processing apparatus shown in Fig. 1, a digital signal may be temporarily stored in a frame memory. When interpolated pixels are generated, the digital signal stored in the frame memory may be rewritten with the interpolated pixels and output. Instead, a process that obtains the absolute value of the difference of each of the foregoing processes may be performed by using the square value of the difference.

It should be understood by those skilled in the art that various modifications, combinations, subcombinations and alternations may occur depending on design requirements and other factors insofar as they are within the scope of the appended claims or the equivalents thereof.

## Claims

1. A video signal processing apparatus that determines whether pixels of a video signal have been dropout compensated and compensates pixels that have been dropout compensated according to a correlation of adjacent pixels, corresponding pixels in adjacent fields, or corresponding pixels in adjacent frames.

2. A video signal processing apparatus that determines pixels that have been dropout compensated from a video signal that has been dropout compensated, comprising:

   detection means for detecting the absolute value or the square value of the difference of pixel data of two pixels that exist at the same horizontal position of two adjacent lines of the video signal; and
   determination means for determining a pixel that satisfies a first condition of which the absolute value or the square value is smaller than a predetermined threshold value to be a pixel that has been dropout compensated.

3. A video signal processing apparatus that determines pixels that have been dropout compensated from a video signal that has been dropout compensated, comprising:

   first detection means for detecting the absolute value or the square value of the first difference of pixel data of two pixels that exist at the same position in a predetermined field or frame and the temporally adjacent field or frame that is immediately preceded by the predetermined field or frame;
   second detection means for detecting the absolute value or the square value of the second difference of pixel data of two pixels that exist at the same position in the predetermined field or frame and the temporally adjacent field or frame that is immediately followed by the predetermined field or frame; and
   determination means for determining a pixel that satisfies a second condition of which the absolute value or the square value of the first difference is larger than a predetermined threshold value and the absolute value or the square value of the second difference is larger than the predetermined threshold value to be a pixel that has been dropout compensated.

4. A video signal processing apparatus that determines pixels that have been dropout compensated from a video signal that has been dropout compensated, comprising:

   first detection means for detecting the absolute value or the square value of the first difference of pixel data of two pixels that exist at the same horizontal position of adjacent two lines of the video signal;
second detection means for detecting the absolute value or the square value of the second difference of pixel data of two pixels that exist at the same position in a predetermined field or frame and the temporally adjacent field or frame that is immediately preceded by the predetermined field or frame;
third detection means for detecting the absolute value or the square value of the third difference of pixel data of two pixels that exist at the same position in the predetermined field or frame and the temporally adjacent field or frame that is immediately followed by the predetermined field or frame; and
determination means for determining a pixel that satisfies both a first condition of which the absolute value or the square value of the first difference is smaller than a first threshold value and a second condition of which the absolute value or the square value of the second difference is larger than a second threshold value and the absolute value or the square value of the third difference is larger than the second threshold value to be a pixel that has been dropout compensated.

**5.** The video signal processing apparatus as set forth in claim 4,
wherein the determination means determines a pixel that satisfies the first condition, the second condition, and a third condition of which the number of pixels that are successive in the horizontal direction is larger than a third threshold value to be a pixel that has been dropout compensated.

**6.** The video signal processing apparatus as set forth in claim 5, further comprising:

calculating means for calculating the number of pixels that satisfy the first condition, the second condition, and the third condition for each line; and
fourth detection means for detecting the fourth difference of the calculated value of a predetermined line obtained by the calculation means and the calculated value of at least one line adjacent to the predetermined line,

wherein the determination means determines a pixel that satisfies a fourth condition of which the fourth difference is larger than a fourth threshold value to be a pixel that has been dropout compensated.

**7.** The video signal processing apparatus as set forth in claim 2, 3, 4, 5, or 6, further comprising:

interpolated pixel generation means for generating an interpolated value for a pixel determined to have been dropout compensated with pixel data of a plurality of pixels that are temporally and/or spatially different from the pixel determined to have been dropout compensated;
correlation detection means for detecting a strongly correlation direction of the pixel determined to have been dropout compensated; and
switching means for replacing the pixel determined to have been dropout compensated with the interpolated value generated with pixel data in the strongly correlation detection detected by the correlation detection means.

**8.** A video signal processing method of determining pixels that have been dropout compensated from a video signal that has been dropout compensated, comprising the steps of:

detecting the absolute value or the square value of the difference of pixel data of two pixels that exist at the same horizontal position of two adjacent lines of the video signal; and
determining a pixel that satisfies a first condition of which the absolute value or the square value is smaller than a predetermined threshold value to be a pixel that has been dropout compensated.

**9.** A video signal processing method of determining pixels that have been dropout compensated from a video signal that has been dropout compensated, comprising the steps of:

detecting the absolute value or the square value of the first difference of pixel data of two pixels that exist at the same position in a predetermined field or frame and the temporally adjacent field or frame that is immediately preceded by the predetermined field or frame;
detecting the absolute value or the square value of the second difference of pixel data of two pixels that exist at the same position in the predetermined field or frame and the temporally adjacent field or frame that is immediately followed by the predetermined field or frame; and
determining a pixel that satisfies a second condition of which the absolute value or the square value of the first difference is larger than a predetermined threshold value and the absolute value or the square value of the second difference is larger than the predetermined threshold value to be a pixel that has been dropout compensated.

10. A video signal processing method of determining pixels that have been dropout compensated from a video signal that has been dropout compensated, comprising the steps of:

detecting the absolute value or the square value of the first difference of pixel data of two pixels that exist at the same horizontal position of adjacent two lines of the video signal;

detecting the absolute value or the square value of the second difference of pixel data of two pixels that exist at the same position in a predetermined field or frame and the temporally adjacent field or frame that is immediately preceded by the predetermined field or frame;

detecting the absolute value or the square value of the third difference of pixel data of two pixels that exist at the same position in the predetermined field or frame and the temporally adjacent field or frame that is immediately followed by the predetermined field or frame; and

determining a pixel that satisfies both a first condition of which the absolute value or the square value of the first difference is smaller than a first threshold value and a second condition of which the absolute value or the square value of the second difference is larger than a second threshold value and the absolute value or the square value of the third difference is larger than the second threshold value to be a pixel that has been dropout compensated.

11. The video signal processing method as set forth in claim 10,

wherein the determination step is performed by determining a pixel that satisfies the first condition, the second condition, and a third condition of which the number of pixels that are successive in the horizontal direction is larger than a third threshold value to be a pixel that has been dropout compensated.

12. The video signal processing method as set forth in claim 11, further comprising the steps of:

calculating the number of pixels that satisfy the first condition, the second condition, and the third condition for each line; and

detecting the fourth difference of the calculated value of a predetermined line obtained at the calculation step and the calculated value of at least one line adjacent to the predetermined line,

wherein the determination step is performed by determining a pixel that satisfies a fourth condition of which the fourth difference is larger than a fourth threshold value to be a pixel that has been dropout compensated.

13. The video signal processing method as set forth in claim 8, 9, 10, 11, or 12, further comprising the steps of:

generating an interpolated value for a pixel determined to have been dropout compensated with pixel data of a plurality of pixels that are temporally and/or spatially different from the pixel determined to have been dropout compensated;

detecting a strongly correlation direction of the pixel determined to have been dropout compensated; and replacing the pixel determined to have been dropout compensated with the interpolated value generated with pixel data in the strongly correlation detection detected at the correlation detection step.

14. A video signal processing apparatus that determines pixels that have been dropout compensated from a video signal that has been dropout compensated, comprising:

a detection section that detects the absolute value or the square value of the difference of pixel data of two pixels that exist at the same horizontal position of two adjacent lines of the video signal; and

a determination section that determines a pixel that satisfies a first condition of which the absolute value or the square value is smaller than a predetermined threshold value to be a pixel that has been dropout compensated.

15. A video signal processing apparatus that determines pixels that have been dropout compensated from a video signal that has been dropout compensated, comprising:

a first detection section that detects the absolute value or the square value of the first difference of pixel data of two pixels that exist at the same position in a predetermined field or frame and the temporally adjacent field or frame that is immediately preceded by the predetermined field or frame;

a second detection section that detects the absolute value or the square value of the second difference of pixel data of two pixels that exist at the same position in the predetermined field or frame and the temporally adjacent field or frame that is immediately followed by the predetermined field or frame; and

a determination section that determines a pixel that satisfies a second condition of which the absolute value or the square value of the first difference is larger than a predetermined threshold value and the absolute value or the square value of the second difference is larger than the predetermined threshold value to be a pixel that has been dropout compensated.

16. A video signal processing apparatus that determines pixels that have been dropout compensated from a video signal that has been dropout compensated, comprising:

a first detection section that detects the absolute value or the square value of the first difference of pixel data of two pixels that exist at the same horizontal position of adjacent two lines of the video signal;

a second detection section that detects the absolute value or the square value of the second difference of pixel data of two pixels that exist at the same position in a predetermined field or frame and the temporally adjacent field or frame that is immediately preceded by the predetermined field or frame;

a third detection section that detects the absolute value or the square value of the third difference of pixel data of two pixels that exist at the same position in the predetermined field or frame and the temporally adjacent field or frame that is immediately followed by the predetermined field or frame; and

a determination section that determines a pixel that satisfies both a first condition of which the absolute value or the square value of the first difference is smaller than a first threshold value and a second condition of which the absolute value or the square value of the second difference is larger than a second threshold value and the absolute value or the square value of the third difference is larger than the second threshold value to be a pixel that has been dropout compensated.

# *Fig. 1*

<u>1</u>

# Fig. 2

# Fig. 3

# Fig. 4

# Fig. 5

## Fig. 6

# Fig. 7

## Fig. 8

## Fig. 9A

## Fig. 9B

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 148 291 A (KIMURA ET AL) 15 September 1992 (1992-09-15) | 1 | H04N5/94 |
| A | * column 3, line 21 - line 22 * * column 3, line 54 - line 56 * * column 4, line 19 - line 23 * * column 5, line 2 - line 18 * * column 6, line 28 - line 35 * * figures 1-8 * | 2-16 | |
| X | US 5 283 660 A (INOUE ET AL) 1 February 1994 (1994-02-01) | 1 | |
| A | * the whole document * | 2-16 | |
| X | US 5 587 804 A (MOON ET AL) 24 December 1996 (1996-12-24) | 1 | |
| A | * column 3, line 34 - line 46 * * figure 3 * | 2-16 | |
| X | US 4 287 529 A (TATAMI ET AL) 1 September 1981 (1981-09-01) | 1 | TECHNICAL FIELDS SEARCHED (IPC) |
| A | * the whole document * | 2-16 | H04N |

The present search report has been drawn up for all claims

| Place of search | Date of completion of the search | Examiner |
|---|---|---|
| The Hague | 20 February 2006 | Braga, J |

## ANNEX TO THE EUROPEAN SEARCH REPORT
## ON EUROPEAN PATENT APPLICATION NO.

EP 05 25 6019

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2006

| Patent document cited in search report | | Publication date | Patent family member(s) | | Publication date |
|---|---|---|---|---|---|
| US 5148291 | A | 15-09-1992 | NONE | | |
| US 5283660 | A | 01-02-1994 | JP | 4357794 A | 10-12-1992 |
| US 5587804 | A | 24-12-1996 | JP | 7075129 A | 17-03-1995 |
| | | | KR | 9511664 B1 | 07-10-1995 |
| US 4287529 | A | 01-09-1981 | AT | 382280 B | 10-02-1987 |
| | | | AT | 325779 A | 15-06-1986 |
| | | | AU | 525763 B2 | 02-12-1982 |
| | | | AU | 4652979 A | 01-11-1979 |
| | | | CA | 1132706 A1 | 28-09-1982 |
| | | | DE | 2917449 A1 | 08-11-1979 |
| | | | FR | 2424682 A1 | 23-11-1979 |
| | | | GB | 2020140 A | 07-11-1979 |
| | | | IT | 1112758 B | 20-01-1986 |
| | | | JP | 1440443 C | 30-05-1988 |
| | | | JP | 54143017 A | 07-11-1979 |
| | | | JP | 62046110 B | 30-09-1987 |
| | | | NL | 7903409 A | 30-10-1979 |

For more details about this annex : see Official Journal of the European Patent Office, No. 12/82